# FASCICULE DE BREVET EUROPEEN

(11) **EP 4 285 036 B1**
(45) Date de publication et mention de la délivrance du brevet: **14.05.2025**
(21) Numéro de dépôt: 22704935.0
(22) Date de dépôt: 25.01.2022
(51) Int. Cl.: F16D 55/225, F16D 65/00, H02K 5/24, H02K 7/116, F16D 121/24

(54) **BOÎTIER D'ACTIONNEUR ÉLECTROMÉCANIQUE DE FREIN À DISQUE COMPORTANT UN ELEMENT AMORTISSEUR**
GEHÄUSE FÜR EINEN ELEKTROMECHANISCHEN SCHEIBENBREMSAKTUATOR MIT DÄMPFUNGSELEMENT
HOUSING FOR AN ELECTROMECHANICAL DISC BRAKE ACTUATOR COMPRISING A DAMPING ELEMENT

(30) Priorité: 26.01.2021 FR 2100709
(43) Date de publication de la demande: 06.12.2023
(73) Titulaire: Hitachi Astemo France, 93700 Drancy (FR)
(72) Inventeur: BRIANE, Nicolas, 49800 Trelaze (FR); DE CHAMPEAUX, Benoit, 93300 Aubervilliers (FR)
(74) Mandataire: Brevalex
(86) Numéro de dépôt international: PCT/FR2022/050134
(87) Numéro de publication internationale: WO 2022/162304

(56) Documents cités:
- EP-A1- 2 824 354
- EP-A2- 2 774 820
- FR-A1- 3 059 744
- KR-A- 20190 029 002
- US-A1- 2017 335 910

## Description

### DOMAINE TECHNIQUE

La présente invention se rapporte à un boîtier d'actionneur électromécanique.

### ÉTAT DE LA TECHNIQUE ANTÉRIEURE

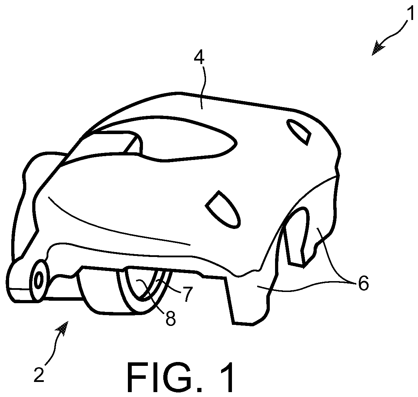

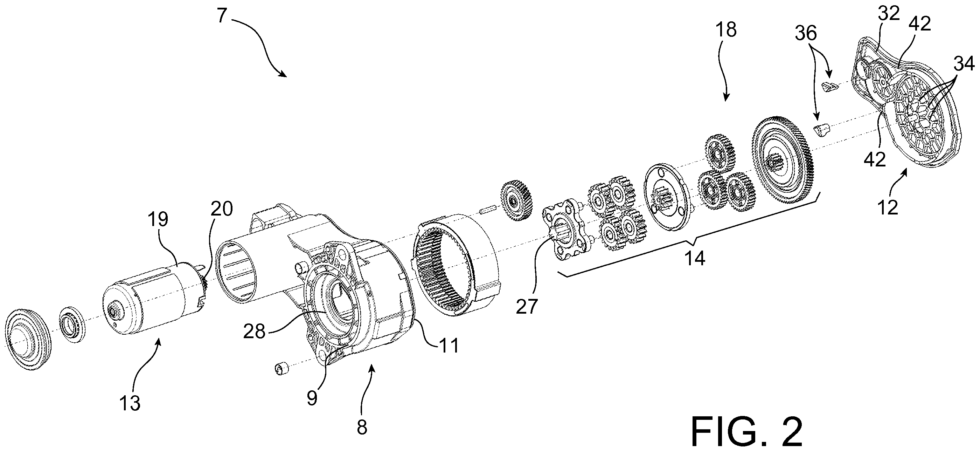

En référence à la figure 1, on a représenté, en perspective, un exemple de corps d'étrier 1 de frein à disque électromécanique. Par ailleurs, la figure 2 représente, selon une vue éclatée, un exemple d'actionneur électromécanique 7 destiné à équiper un tel étrier. Comme visible sur la figure 1, le corps d'étrier 1 comporte une base 2 prolongée par une voûte 4, elle-même prolongée par des doigts 6. La base 2 comporte un logement dans lequel est engagé un piston mobile pour presser une plaquette de frein non représentée sur un disque de freinage. Cette base 2 renferme encore dans la région arrière du piston un mécanisme de transformation de mouvement à liaison hélicoïdale, pour convertir un mouvement de rotation en un mouvement de translation du piston, ce qui correspond à convertir un moment de forces en un effort presseur.

Ce corps d'étrier 1 est en outre équipé d'un actionneur électromécanique 7 pour agir sur le piston de façon à presser la plaquette contre le disque, sur activation de cet actionneur 7. Cet actionneur 7 comprend un boîtier 8, ou carter, ayant une face de fixation 9, visible sur la figure 2, par laquelle il est destiné à être accouplé au corps d'étrier 1, et une face opposée 11 fermée par un couvercle 12. La face de fixation 9 et la face opposée 11 sont des faces sensiblement planes et parallèles l'une à l'autre.

De plus, comme visible sur la figure 2, la face de fixation 9 comporte une portion principale entourant une ouverture 28 formant un centrage. La face de fixation 9 du boîtier 8 est en outre appliquée contre la base 2 du corps d'étrier 1, qui est une surface entièrement plane.

Le boîtier 8 renferme différents composants formant un ensemble de motorisation 13 accouplé à un réducteur mécanique 14 qui permet de déplacer le piston lorsque ce réducteur 14 est accouplé au corps d'étrier 1, c'est-à-dire lorsque l'actionneur 7 est fixé à la base 2. Le réducteur 14-entraîne deux trains épicycloïdaux 18. L'ensemble de motorisation 13 comporte un moteur électrique 19 ayant un pignon de sortie 20.

Comme visible sur la figure 2, les éléments du réducteur 14 tournent autour d'axes parallèles à l'axe de rotation AM du moteur 19. Dans l'exemple des figures, l'axe AM est parallèle à un axe principal AX qui correspond à l'axe de translation du piston lorsque l'actionneur 7 est monté sur le corps d'étrier 1, cet axe AX s'étendant transversalement par rapport au véhicule équipé du frein.

Lorsque l'actionneur 7 est monté, le moteur 19 est en place dans la cavité correspondant à l'ouverture 24, et le pignon 20 entraîne une roue dentée simple (non représentée). Le train épicycloïdal 18 comporte un élément d'accouplement 27, par exemple de type torx^{™}, qui débouche dans une ouverture correspondante 28 de la face de fixation 9, pour entraîner le mécanisme de transformation de mouvement logé dans la base 2.

Par ailleurs, l'étrier comporte aussi, outre les moyens électromécaniques de déplacement du piston, des moyens hydrauliques de déplacement du piston. Dans ce cas, les moyens électromécaniques assurent le déplacement du piston dans le cas d'un freinage de parking et/ou de secours, et les moyens hydrauliques assurent son déplacement en cas de freinage de service.

De façon classique, le couvercle 12, qui vient fermer la face opposée 11 du boîtier 8 de l'actionneur électromécanique 7, est fixé directement sur le boîtier 8 de l'actionneur électromécanique.

Ainsi, les vibrations qui sont produites par l'ensemble de motorisation 13 et le réducteur 14, sont transmises directement au couvercle 12. Le couvercle 12, en vibrant, produit alors un bruit relativement important.

Le document KR 2019 0029002 A décrit un un actionneur électromécanique pour presser une ou plusieurs plaquettes de frein contre le disque afin de générer le freinage. L'actionneur comprend un boîtier et un couvercle, ainsi qu'un amortisseur placé entre le boîtier et le couvercle.

L'invention a pour but de proposer un boîtier d'un actionneur qui est conçu de manière à limiter le bruit global produit par l'actionneur électromécanique

### EXPOSÉ DE L'INVENTION

L'invention a donc pour objet, selon l'un de ses aspects, un boîtier d'actionneur électromécanique comportant une face ouverte et sur laquelle dite face ouverte, un couvercle est monté pour fermer une ouverture de ladite face ouverte, le boîtier comportant en outre des éléments amortisseurs associées au couvercle interposés entre le couvercle et le boîtier, chaque élément amortisseur s'étendant selon une direction principale verticale et comporte un tronçon inférieur qui est reçu dans un logement associé du boiter et un tronçon supérieur qui est reçu dans un logement associé du couvercle.

Ces moyens d'amortissement permettent notamment de réduire l'amplitude des vibrations du couvercle, qui proviennent du boîtier. Les vibrations du couvercle étant par conséquent moindres, le bruit généré est par conséquent lui aussi réduit.

De préférence, lesdits éléments amortisseurs sont comprimés entre le boîtier et le couvercle.

De préférence, le boîtier comporte deux éléments amortisseurs répartis symétriquement par rapport à un axe principal médian du couvercle.

De préférence, chaque tronçon d'un élément amortisseur est comprimé horizontalement dans le logement qui lui est associé.

De préférence, chaque élément amortisseur est comprimé selon la direction verticale par le couvercle et le boîtier.

De préférence, chaque logement du couvercle et du boîtier comporte un fond contre lequel une extrémité verticale de l'élément amortisseur est en appui verticalement. L'invention concerne aussi un actionneur électromécanique pour étrier de frein à disque de véhicule automobile, qui comporte un boîtier selon l'invention.

L'invention concerne aussi un étrier de frein à disque de véhicule automobile, qui comporte un actionneur électromécanique selon l'invention.

L'invention concerne aussi un frein à disque de véhicule automobile, caractérisé en ce qu'il comporte un étrier selon l'invention.

### BRÈVE DESCRIPTION DES DESSINS

[Fig. 1] est une vue d'ensemble, en perspective, d'un corps d'étrier de frein électromécanique représenté seul.
[Fig. 2] est une vue d'ensemble, éclatée, d'un actionneur électromécanique destiné à équiper un étrier.
[Fig. 3] est une vue en coupe d'un actionneur similaire à celui représenté aux figures 1 et 2, montrant la liaison amortie entre le boîtier et le couvercle.
[Fig. 4] est une représentation schématique en perspective d'un amortisseur installé entre le boîtier et le couvercle à la figure 3.
[Fig. 5] est une représentation schématique en perspective du couvercle sur lequel deux amortisseurs sont montés.
[Fig. 6] est une représentation schématique en perspective du boîtier sur lequel deux amortisseurs sont montés.

### EXPOSÉ DÉTAILLÉ DE L'INVENTION

Dans la description qui va suivre, des éléments identiques, similaires ou analogues seront désignés par les mêmes chiffres de référence.

On utilisera aussi l'orientation longitudinale, verticale, transversale selon le repère V, L, T indiqué aux figures, pour laquelle l'orientation verticale est l'orientation parallèle aux axes AM et AX, l'orientation longitudinale est la direction principale du couvercle 12 et l'orientation transversale est parallèle au plan du couvercle 12, selon sa largeur.

Les figures 1 et 2 ont déjà été décrites précédemment dans la partie relative à l'état de la technique antérieure et au contexte technique de l'invention. Il est à noter que les caractéristiques propres au corps d'étrier 1, au boîtier 8 et à l'actionneur électromécanique 7, notamment leurs éléments constitutifs, ne sont pas décrites de nouveau ici, seules les caractéristiques propres au couvercle 12 étant explicitées. Toutefois, le boîtier 8, l'actionneur électromécanique 7 et l'étrier de frein conformes à l'invention peuvent comporter l'une quelconque de ces caractéristiques, seules ou en combinaison, décrites précédemment en référence aux figures 1 et 2.

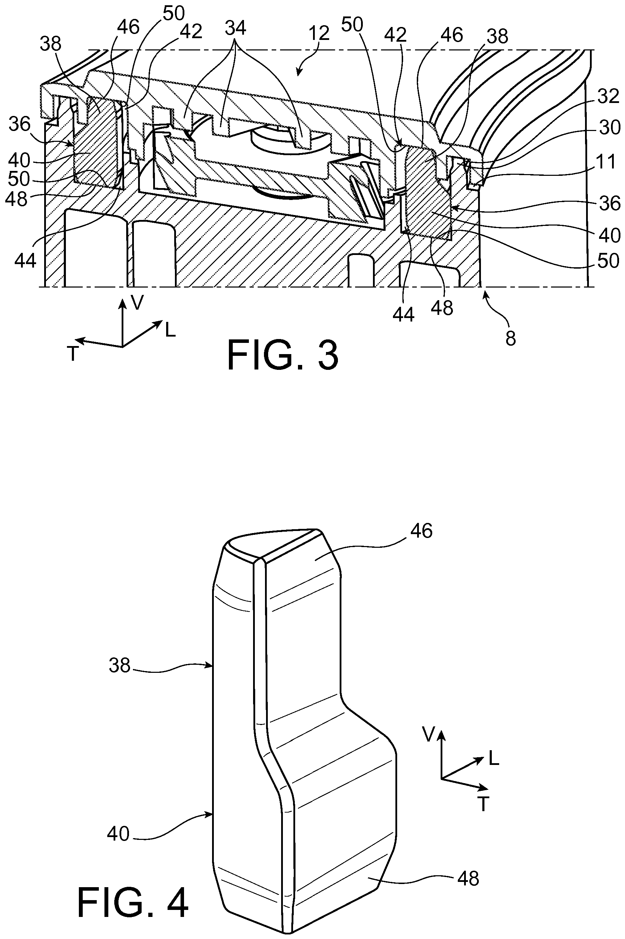

En référence aux figures 3 et suivantes, on va décrire un mode de réalisation préféré de la liaison entre le boîtier 8 et le couvercle 12.

Comme on l'a dit précédemment, le boîtier 8 comporte une face 11 ouverte, sur laquelle un couvercle 12 est monté.

Afin de garantir une bonne étanchéité et un bon positionnement du couvercle 12 par rapport à la face 11 du boîtier, une nervure 30 s'étend en saillie de la face 11, sur toute la périphérie de celle-ci.

La nervure 30 est reçue dans une gorge 32 associée du couvercle 12.

Comme on l'a dit précédemment, lors du fonctionnement de l'actionneur 7, des vibrations sont produites par l'ensemble de motorisation et sont transmises au couvercle 12.

Le couvercle 12 vibre alors à la façon d'une membrane, il vibre aussi en torsion autour de son axe principal longitudinal.

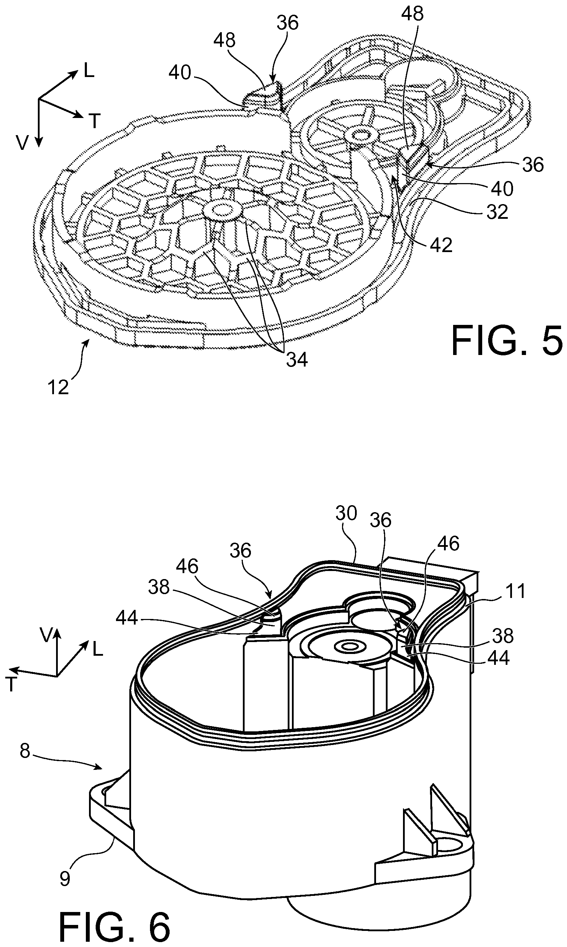

Pour limiter ces vibrations, comme on peut le voir à la figure 5, le couvercle comporte des nervures 34, formant par exemple une structure hexagonale dite en nid d'abeille.

Pour compléter l'effet de ces nervures, des éléments amortisseurs 36 sont joints au couvercle 12, limitant ainsi ses vibrations.

Les éléments amortisseurs 36 sont comprimés entre le couvercle 12 et le boîtier 8, produisant ainsi un appui sur le couvercle 12 et amortissant les vibrations de celui-ci.

Ici, selon un mode de réalisation préféré, deux éléments amortisseurs 36 sont montés entre le boîtier 8 et le couvercle 12.

Les éléments amortisseurs 36 sont répartis symétriquement par rapport à un plan longitudinal vertical médian du couvercle 12.

Chaque élément amortisseur 36 est réalisé en un matériau élastique tel qu'un élastomère, ce qui lui assure un amortissement AV viscoélastique et/ou par cisaillement d'au moins une partie des vibrations auxquelles il est soumis.

Les éléments amortisseurs 36 sont disposés à des emplacements dans lesquels ils n'interfèrent pas avec les autres composants de l'actionneur 7.

Comme on peut le voir plus en détail à la figure 4, chaque élément amortisseur 36 est d'orientation principale verticale et il comporte un tronçon supérieur 38 qui coopère avec le couvercle 12 et un tronçon inférieur 40 qui coopère avec le boîtier 8.

Le couvercle 12 comporte un logement 42 qui est associé à chaque élément amortisseur et dans lequel le tronçon supérieur 38 de l'élément amortisseur 36 associé est reçu.

Selon un mode de réalisation préféré, le tronçon supérieur 38 de l'élément amortisseur 36 est comprimé horizontalement par les parois du logement 42 lorsqu'il est reçu dans ce logement 42.

Cet état est obtenu par le fait que les dimensions du tronçon supérieur 38 sont supérieures à celles du logement 42 lorsque le tronçon supérieur 38 de l'élément amortisseur 36 n'est pas monté dans le logement 42.

Pour favoriser l'introduction du tronçon supérieur 38 de l'élément amortisseur 36 dans le logement 42, son extrémité supérieure libre 46 est chanfreinée, comme on peut le voir à la figure 4.

De manière similaire, le boîtier 8 comporte un logement 44 qui est associé à chaque élément amortisseur 36 et dans lequel le tronçon inférieur 40 de l'élément amortisseur 36 est reçu.

Selon un mode de réalisation préféré, le tronçon inférieur 40 de l'élément amortisseur 36 est comprimé horizontalement par les parois du logement 44 du boîtier 8 lorsqu'il est reçu dans ce logement 44.

Cet état est obtenu par le fait que les dimensions du tronçon inférieur 40 sont supérieures à celles du logement 44 lorsque le tronçon inférieur 40 de l'élément amortisseur 36 n'est pas monté dans le logement 44 du boîtier 8.

Selon une variante de réalisation, dans le cadre d'un amortissement du type viscoélastique AV, chaque élément amortisseur 36 a un volume sensiblement égal à celui des logements 42, 44 correspondant. Chaque élément amortisseur 36 est ainsi reçu dans chaque logement 42, 44 avec contrainte sur au moins une partie de la surface des parois des dits logements 42, 44 correspondant.

Pour favoriser l'introduction du tronçon inférieur 40 de l'élément amortisseur 36 dans le logement 44, son extrémité inférieure libre 48 est chanfreinée, comme on peut le voir à la figure 4.

Chaque élément amortisseur 36 est en outre comprimé verticalement entre le boîtier 8 et le couvercle 12.

Cette compression verticale provoque une déformation horizontale supplémentaire de l'élément amortisseur 36 dans les logements associés 42, 44 du couvercle 12 et du boîtier 8.

Pour assurer la compression verticale de chaque élément amortisseur 36, les logements associés 42, 44 comportent chacun une paroi de fond 50 sur laquelle une extrémité verticale 46, 48 associée est mise en appui verticalement lorsque le couvercle 12 est monté sur le boîtier 8.

L'utilisation de tels éléments amortisseurs 36 permet de limiter l'amplitude des vibrations produisant du bruit, sans avoir à modifier le couvercle 12, ni le boîtier 8.

En effet, les logements 42, 44 destinés à recevoir les éléments amortisseurs peuvent être des logements déjà présents sur le couvercle 12 et le boîtier 8, les formes et dimensions des éléments amortisseurs 36 sont alors déterminées en fonction des formes et dimensions des logements 42, 44 destinés à recevoir les éléments amortisseurs 36.

Selon le mode de réalisation représenté aux figures, les deux éléments amortisseurs 36 sont de formes similaires et sont disposés symétriquement par rapport à un axe longitudinal médian du couvercle 12.

Cette disposition permet, en plus d'amortir les vibrations du couvercle 12 à la manière d'une membrane, d'amortir les vibrations du couvercle 12 en torsion autour de cet axe longitudinal médian du couvercle 12.

Il sera compris que l'invention n'est pas limitée à ce mode de réalisation et que les éléments amortisseurs 36 peuvent être disposés dans l'actionneur 7 en d'autres emplacements et/ou de manière non symétrique.

### NOMENCLATURE

1 corps d'étrier
2 base
7 actionneur électromécanique
4 voûte
6 doigts
8 boîtier
9 face de fixation
11 face opposée
12 couvercle
28, 24 : ouverture
13 ensemble de motorisation
14 réducteur mécanique
18 train épicycloïdal
19 moteur électrique
20 pignon de sortie
21, 22 : cartes électroniques
23 plaque
27 élément d'accouplement
30, 34 : nervures
32 gorge
36 élément amortisseur
38 tronçon supérieur
40 tronçon inférieur
42, 44 : logements associés
46 extrémité supérieure libre
48 extrémité inférieure libre
50 paroi de fond.

## Revendications

1. Boîtier (8) d'actionneur électromécanique (7) comportant une face ouverte (11) et sur laquelle dite face ouverte (11), un couvercle (12) est monté pour fermer une ouverture de ladite face ouverte (11),
le boitier (8) comportant en outre des éléments amortisseurs (36) associées au couvercle (12) interposés entre le couvercle (12) et le boîtier (8),
chaque élément amortisseur (36) s'étendant selon une direction principale verticale et comporte un tronçon inférieur (40) qui est reçu dans un logement (44) associé du boiter (8) **caractérisé en ce que** chaque élément amortisseur (36) comporte aussi un tronçon supérieur (38) qui est reçu dans un logement associé (42) du couvercle (12).

2. Boîtier (8) selon la revendication précédente, **caractérisé en ce que** lesdits éléments amortisseurs (36) sont comprimés entre le boîtier (8) et le couvercle (12).

3. Boîtier (8) selon la revendication 1 ou 2, **caractérisé en ce qu'**il comporte deux éléments amortisseurs (36) répartis symétriquement par rapport à un axe principal médian du couvercle (12).

4. Boîtier (8) selon l'une quelconque des revendications précédentes, **caractérisé en ce que** chaque tronçon (38, 40) d'un élément amortisseur (36) est comprimé horizontalement dans le logement (42, 44) qui lui est associé.

5. Boîtier (8) selon l'une quelconque des revendications précédentes, **caractérisé en ce que** chaque élément amortisseur (36) est comprimé selon la direction verticale par le couvercle (12) et le boîtier (8).

6. Boîtier (8) selon la revendication 5, **caractérisé en ce que** chaque logement (42, 44) du couvercle (12) et (12) et du boîtier (8) comporte un fond (50) contre lequel une extrémité verticale (46, 48) de l'élément amortisseur (36) est en appui verticalement.

7. Actionneur électromécanique (7) pour étrier de frein à disque de véhicule automobile, **caractérisé en ce qu'**il comporte un boîtier (8) selon l'une quelconque des revendications précédentes.

8. Etrier de frein à disque de véhicule automobile, **caractérisé en ce qu'**il comporte un actionneur électromécanique (7) selon la revendication 7.

9. Frein à disque de véhicule automobile, **caractérisé en ce qu'**il comporte un étrier selon la revendication 8.

## Patentansprüche

1. Gehäuse (8) eines elektromechanischen Stellglieds (7), das eine offene Seite (11) umfasst und an der die offene Seite (11) ein Deckel (12) zum Verschließen einer Öffnung der offenen Seite (11) montiert ist, wobei das Gehäuse (8)
ferner Dämpfungselemente (36) umfasst, die mit dem Deckel (12) verbunden sind und zwischen dem Deckel (12) und dem Gehäuse (8) angeordnet sind, wobei sich jedes Dämpfungselement (36) entlang einer vertikalen Hauptrichtung erstreckt
und ein unteres Teilstück (40) umfasst, das in einer zugehörigen Aufnahme (44) des Gehäuses (8) aufgenommen wird, **dadurch gekennzeichnet, dass** jedes Dämpfungselement (36) auch ein oberes Teilstück (38) umfasst, das in einer zugehörigen Aufnahme (42) des Deckels (12) aufgenommen wird.

2. Gehäuse (8) nach dem vorhergehenden Anspruch, **dadurch gekennzeichnet, dass** die Dämpfungselemente (36) zwischen dem Gehäuse (8) und dem Deckel (12) zusammengedrückt werden.

3. Gehäuse (8) nach Anspruch 1 oder 2, **dadurch gekennzeichnet, dass** es zwei Dämpfungselemente (36) umfasst, die symmetrisch zu einer mittleren Hauptachse des Deckels (12) verteilt sind.

4. Gehäuse (8) nach einem der vorhergehenden Ansprüche, **dadurch gekennzeichnet, dass** jedes Teilstück (38, 40) eines Dämpfungselements (36) horizontal in der ihm zugeordneten Aufnahme (42, 44) zusammengedrückt wird.

5. Gehäuse (8) nach einem der vorhergehenden Ansprüche, **dadurch gekennzeichnet, dass** jedes Dämpfungselement (36) in vertikaler Richtung durch den Deckel (12) und das Gehäuse (8) zusammengedrückt wird.

6. Gehäuse (8) nach Anspruch 5, **dadurch gekennzeichnet, dass** jede Aufnahme (42, 44) des Deckels (12) und (12) und des Gehäuses (8) einen Boden (50) umfasst, an dem ein vertikales Ende (46, 48) des Dämpfungselements (36) vertikal anliegt.

7. Elektromechanische Stellglied (7) für Scheibenbremssattel für Kraftfahrzeuge, **dadurch gekennzeichnet, dass** es ein Gehäuse (8) nach einem der vorhergehenden Ansprüche umfasst.

8. Scheibenbremssattel für Kraftfahrzeuge, **dadurch gekennzeichnet, dass** er ein elektromechanisches Stellglied (7) nach Anspruch 7 umfasst.

9. Scheibenbremse für Kraftfahrzeuge, **dadurch gekennzeichnet, dass** sie einen Bremssattel nach Anspruch 8 umfasst.

## Claims

1. A case (8) for an electromechanical actuator (7) including an open face (11) and on which said open face (11), a cover (12) is mounted to close an opening of said open face (11),
the case (8) further including damping elements (36) associated to the cover (12) interposed between the cover (12) and the case (8),
each damping element (36) extending according to a main vertical direction and includes a lower section (40) which is received in a housing (44) associated to the case (8) **characterized in that** each damping element (36) also includes an upper section (38) which is received in an associated housing (42) of the cover (12).

2. The case (8) according to the preceding claim, **characterised in that** said damping elements (36) are compressed between the case (8) and the cover (12).

3. The case (8) according to claim 1 or 2, **characterised in that** it includes two damping elements (36) symmetrically distributed with respect to a middle main axis of the cover (12).

4. The case (8) according to any one of the preceding claims, **characterised in that** each section (38, 40) of a damping element (36) is compressed horizontally in the housing (42, 44) associated thereto.

5. The case (8) according to any one of the preceding claims, **characterised in that** each damping element (36) is compressed according to the vertical direction by the cover (12) and the case (8).

6. The case (8) according to claim 5, **characterised in that** each housing (42, 44) of the cover (12) and (12) and of the case (8) includes a bottom (50) against which a vertical end (46, 48) of the damping element (36) bears vertically.

7. An electromechanical actuator (7) for a motor vehicle disc brake caliper, **characterised in that** it includes a case (8) according to any one of the preceding claims.

8. A motor vehicle disc brake caliper, **characterised in that** it includes an electromechanical actuator (7) according to claim 7.

9. A motor vehicle disc brake, **characterised in that** it includes a caliper according to claim 8.
